## Europäisches Patentamt

## European Patent Office

## Office européen des brevets

(11) Publication number: **0 198 403**
**A2**

---

(12) **EUROPEAN PATENT APPLICATION**

---

(21) Application number: **86104822.1**

(22) Date of filing: **09.04.86**

(51) Int. Cl.⁴: **G 06 F 15/20,** G 06 F 15/42

---

(30) Priority: **09.04.85 JP 74899/85**
**09.04.85 JP 74900/85**

(43) Date of publication of application: **22.10.86**
**Bulletin 86/43**

(84) Designated Contracting States: **DE FR NL**

(71) Applicant: **FUJI PHOTO FILM CO., LTD., 210 Nakanuma Minamiashigara-shi, Kanagawa-ken, 250-01 (JP)**

(72) Inventor: **Hara, Makoto c/o Fuji Photo Film Co., Ltd., No. 798, Miyanodai Kaisei-machi, Ashigara-kami-gun Kanagawa (JP)**

(74) Representative: **Patentanwälte Grünecker, Kinkeldey, Stockmair & Partner, Maximilianstrasse 58, D-8000 München 22 (DE)**

---

(54) **Signal processing method for determining base sequence of nucleic acid.**

㊸ A signal processing method for determining base sequence of nucleic acids by subjecting digital signals to signal processing, said digital signals corresponding to an autoradiograph of plural resolved rows which are formed by resolving a mixture of base-specific DNA fragments or base-specific RNA fragments labeled with a radioactive element in one-dimensional direction on a support medium,

which comprises steps of:

(1) detecting inclination of at least one band to the resolving direction for each resolved row;

(2) allowing one resolved row to be a standard row, and determining a relative position of the inclination-detected band on the standard row, on each resolved row other than the standard row on the basis of the inclination of the band on said each row; and

(3) determining a ratio of resolving distance from the relative position for each resolved row other than the standard row and extending or shortening the resolving distance of said each row on the basis of the ratio.

0198403

## SIGNAL PROCESSING METHOD FOR
## DETERMINING BASE SEQUENCE OF NUCLEIC ACID

### BACKGROUND OF THE INVENTION

#### Field of the Invention

This invention relates to a signal processing method for determining base sequence of nucleic acids.

#### Description of the Prior Art

It is essential to obtain genetic information carried by organisms in order to make the function or replicated mechanism of the organism clear in the field of molecular biology which has been rapidly developed in recent years. Particularly, it is essential to determine base sequence of nucleic acids such as DNA (or DNA fragment; the same applies hereinbelow) which carries specific genetic information.

Maxam-Gilbert method and Sanger-Coulson method are known as typical methods for determining the base sequence of nucleic acids such as DNA and RNA. In the former Maxam-Gilbert method, a group containing a radioactive isotope such as $^{32}$P is attached to a chain molecule of DNA or a DNA fragment at one end to label it with the radioactive element and then the bond between the constitutional units of the chain molecule is base-specifically cleaved by a chemical reaction. A mixture of the resulting base-specific DNA cleavage products is resolved through gel electrophoresis to obtain a resolved pattern (not visible) wherein each of the numerous cleavage products is resolved on the gel support medium. The resovled pattern is visualized on a radiographic film such as an X-ray film to obtain an autoradiograph thereof as a visible image.  The bases in certain positional relationships with the end of the radioactive element-attached chain molecule can be sequentially determined according to the visualized autoradiograph and the applied base-specific cleavage means.  In this way, the sequence for all bases of the DNA specimen can be determined.

In the latter Sanger-Coulson method, synthetic DNA products which are complementary to the chain molecule of DNA or DNA fragment and radioactively labeled, are base-specifically synthesized by utilizing a chemical reaction, and the obtained mixture of numerous synthetic DNA products is resolved on a support medium by gel electrophoresis to obtain a resolved pattern.  In a similar manner to that described above, the base sequence of DNA can be determined according to the visualized autoradiograph.

For the purpose of carrying out the determination of the base sequence of nucleic acids simply with high accuracy in autoradiography, there are described in U.S. Patent No. 549,417 and U.S. Application No. 664,405 autoradiographic procedures which utilize a radiation image recording and reproducing method using a stimulable phosphor sheet, in place of conventional radiography using a radiosensitive material such as an X-ray film. The stimulable phosphor sheet comprises a stimulable phosphor and has such properties that when exposed to a radiation, the stimulable phosphor absorbs a portion of radiation energy and then emits light (stimulated emission) corresponding to the radiation energy stored therein upon excitation with an electromagnetic wave (stimulating rays) such as visible light or infrared rays. According to this method, exposure time can be greatly shortened and there is no fear of causing problems such as chemical fog associated with prior arts.  Further, since the autoradiograph having information on radioactively labeled substances is stored in the phosphor sheet as radiation energy and then read out as stimulated emission in time sequence, information can be expressed by the form of numerals and/or symbols in addition to image.

The base sequence of the nucleic acids has been conventionally determined by visually judging individual resolved positions of the base-specific cleavage products or the base-specific synthetic products of radioactively labeled nucleic acid (hereinafter referred to simply base-specific fragments of nucleic acid) on the autoradiograph and comparing them among the resolved rows thereof. Namely, the analysis of the autoradiograph is done by observing the visualized autoradiograph with eyes, and such visual analysis requires great amounts of time and labor.

Further, since the visual analysis of the autoradiograph varies or fluctuates owing to the skill of investigators, the results on the determination of the base sequence of nucleic acid vary depending on the investigators and the accuracy of information is limited to a certain extent.

In order to improve the accuracy of the information, there are proposed in U.S. Applications No. 568,877 and No. 730,034 methods for automatically determining the base sequence of DNA by obtaining the autoradiograph as digital signals and subjecting the digital signals to appropriate signal processing.

The digital signals corresponding to the autoradiograph of the radioactively labeled substances can be obtained either by visualizing the autoradiograph on a radiographic film and photoelectrically reading out the visible image on said film by means of reflected light or transmitted light when the conventional radiography is employed, or by directly reading out the stimulable phosphor sheet without the visualization of the autoradiograph when the radiation image recording and reproducing method is employed.

However, the resolved pattern obtained by resolving (developing) radioactively labeled substances on a support medium by electrophoresis or the like is liable to cause distortion and noise. The typical distortion is a smiling phenomenon in which the resolving distances of the labeled substances in the both sides of the support medium are shorter than that in the vicinity of the center thereof. The smiling phenomenon is caused by heat dissipation in the course of the resolution (development). It is highly demanded to automatically determine the base sequence of nucleic acids with high accuracy by subjecting the digital signals corresponding to the autoradiograph to efficient signal processing, even when such distortion is caused.

## SUMMARY OF THE INVENTION

The present inventor has found that the base sequence of the nucleic acids can be automatically determined with easiness and high accuracy by suitably processing the digital signals corresponding to the autoradiograph in the method for the automatic determination of the base sequence using autoradiography, even when the resolved pattern causes the smiling phenomenon.

The present invention provides in the first aspect a signal processing method for determining base sequence of nucleic acids by subjecting digital signals to signal processing, said digital signals corresponding to an autoradiograph of plural resolved rows which are formed by resolving a mixture of base-specific DNA fragments or base-specific RNA fragments labeled with a radioactive element in one-dimensional direction on a support medium,

which comprises steps of:

(1) detecting inclination of at least one band to the resolving direction for each resolved row;

(2) allowing one resolved row to be a standard row, and determining a relative position of the inclination-detected band on the standard row, on each resolved row other than the standard row on the basis of the inclination of the band on said each row; and

(3) determining a ratio of resolving distance from the relative position for each resolved row other than the standard row and extending or shortening the resolving distance of said each row on the basis of the ratio.

The present invention provides in the second aspect a signal processing method for determining base sequence of nucleic acids by subjecting said digital signals corresponding to an autoradiograph to signal processing, which comprises steps of:

(1) detecting inclination of at least one band to the resolving direction for each resolved row;

(2) allowing one resolved row to be a standard row, and determining a relative position of the inclination-detected band on the standard row, on each resolved row other than the standard row on the basis of the inclination of the band on said each row;

(3) determining a ratio of resolving distance from the relative position for each resolved row other than the standard row and extending or shortening the resolving distance of said each row on the basis of the ratio; and

(4) detecting all bands on every resolved row and determining the sequence of the bands on the basis of their positions.

The present invention provides in the third aspect a signal processing method for determining base sequence of nucleic acids by subjecting said digital signals corresponding to an autoradiograph to signal processing, which comprises steps of:

(1) detecting inclinations of all bands to the resolving direction for every resolved row; and

(2) allowing one resolved row to be a standard row, and determining a relative position of each band on resolved rows other than the standard row, on the standard row on the basis of the inclination of said band on the other rows.

The present invention provides in the fourth aspect a signal processing method for determining base sequence of nucleic acids by subjecting said digital signals corresponding to an autoradiograph to signal processing, which comprises steps of:

(1) detecting inclinations of all bands to the resolving direction for every resolved row; and

(2) allowing one resolved row to be a standard row, and determining a relative position of each band on resolved rows other than the standard row, on the standard row on the basis of the inclination of said band on the other rows; and

(3) determining the sequence of the bands on the basis of their relative positions.

According to the present invention, the base sequence of the nucleic acids can be simply obtained with high accuracy by passing the digital signals corresponding to the autoradiograph of the resolved pattern obtained by resolving a mixture of the base-specific fragments of nucleic acid on a support medium, through an appropriate circuit having a signal processing function for correcting the smiling, even when the smiling phenomenon is caused on the resolved pattern.

Usually, in the resolved pattern which causes the smiling phenomenon, each band (resolved portion in the shape of rectangle extending perpendicularly to the resolving direction) on resolved rows in the both sides having a shorter resolving distance, is not strictly perpendicular (horizontal) to the resolving derection but inclined according to the degree of the smiling effect.

The present inventor marked such inclination of bands and accomplished a method for making correction for the smiling effect properly and simply.  The smiling-corrected digital signals are further subjected to appropriate signal processing, whereby the base sequence of the nucleic acids can be simply determined with high accuracy.

More in detail, in the first and second methods of the invention, the correction for the similing effect is made en bloc on every resolved row on the basis of the inclination of a typical band for each resolved row.  In the third and fourth methods of the invention, the correction for the similing effect are made individually on every band on the basis of the inclination of each band. The former two method can achieve the correction for smiling effect more simply and in a shorter time.  The latter two method can achieve it more properly when  the smiling effect is variously appeared on bands (there is a band deviation in appearance of the similing effect) and it is further possible to determine the sequence of bands while making the correction of smiling effect.

## BRIEF DESCRIPTION OF DRAWINGS

Figure 1 is a partial view showing an example of a resolved pattern on which a smiling phenomenon is caused.

Figure 2 is a schematic view illustrating a step for detecting the inclination of a band.

Figure 3 is a schematic view illustrating one step for determining a relative position on a lane.

Figure 4 is a schematic view illustrating another step for determining a relative position on a lane.

## DETAILED DESCRIPTION OF THE INVENTION

Examples of samples employable in the present inven- tion include mixtures of base-specific fragments of nucleic acids such as DNA and RNA labeled with a radioactive element. The term "fragments" of nucleic acids mean portions of a long-chain molecule. For instance, a mixture of base-specific DNA cleavage products, which is a kind of a mixture of base-specific DNA fragments, can be obtained by base-specifically cleaving the radioactively labeled DNA according to the aforementioned Maxam-Gilbert method. A mixture of base-specific DNA synthetic products can be obtained by synthesizing from radioactively labeled deoxynucleoside triphosphates and DNA polymerase by use of DNA as a template according to the aforementioned Sanger-Coulson method.

Mixtures of base-specific RNA fragments can be also obtained as a mixture of cleavage products or a mixture of synthetic products in the similar manner to the above-described methods. DNA is composed of four kinds of bases: adenine, guanine, thymine and cytosine as its constitutional units, and RNA is composed of four kinds of bases: adenine, guanine, uracil and cytosine.

These substances can be labeled with a radioactive element such as $^{32}P$, $^{14}C$, $^{36}S$, $^{3}H$ or $^{125}I$ by any of appropriate methods.

A sample, which is a mixture of the base-specific fragments of a nucleic acid labeled with a radioactive element, can be resolved (developed) on a known support medium such as a gel support medium by any of conventional resolving (developing) procedures such as electrophoresis, thin layer chromatography, column chromatography and paper chromatography.

The support medium on which the radioactively labeled substances are resolved, is autoradiographed to obtain an autoradiograph thereof by means of the conventional radiography using a radiosensitive material or the radiation image recording and reproducing method using a stimulable phosphor sheet. The digital signals corresponding to the autoradiograph can be then obtained through an appropriate read-out system.

When the conventional radiography is used, the support medium and a radiosensitive material such as a X-ray film are placed together in layers at a low temperature of -90 to -70 $^{\circ}$C for a long period of time (several tens of hours) to expose the radiographic film. The radiographic film is then developed to visualize the autoradiograph of the radioactively labeled substances on the film, and the visualized autoradiograph is read out by using an image read-out system. For instance, the radiographic film is irradiated with a light beam and the light transmitted thereby or reflected therefrom is photoelectrically detected, whereby the autoradiograph can be obtained as electric signals. Further, digital signals corresponding to the electric signals are obtained through A/D conversion.

When the radiation image recording and reproducing method is used, the support medium and the stimulable phosphor sheet are placed together in layers at an ambient temperature for a short period of time (several seconds to several tens of minutes) to store radiation energy radiating from the radioactively labeled substances in the phosphor sheet, whereby the autoradiograph is recorded as a kind of a latent image (energy-stored image) on the phosphor sheet. The stimulable phosphor sheet has a basic structure where a support comprising, for instance, a plastic film, a phosphor layer comprising a stimulable phosphor such as a divalent europium activated barium fluorobromide phosphor (BaFBr:Eu$^{2+}$) and a transparent protective film are laminated in this order. The stimulable phosphor contained in the stimulable phosphor sheet has such characteristics that the phosphor absorbs and stores radiation energy emitted by the labeled substances when irradiated with a radiation such as X-rays and then releases the stored radiation energy as stimulated emission when excited with visible light to infrared rays.

Subsequently, the autoradiograph stored and recorded on the stimulable phosphor sheet is read out by using a read-out system. For instance, the phosphor sheet is scanned with a laser beam to release the radiation energy stored in the stimulable phosphor as light emission and the emitted light is photoelectrically detected, so that the autoradiograph can be directly obtained as electric signals without the visualization of the autoradiograph. Further, digital signals corresponding to the autoradiograph can be obtained from the electric signals through A/D conversion.

The above-described methods for measuring the autoradiograph and obtaining the digital signals corresponding thereto are described in more detail in the aforementioned U.S. Patent No. 549,417 and U.S. Applications No. 568,877.

While the methods for obtaining the digital signals corresponding to the autoradiograph using the conventional radiography and the radiation image recording and reproducing method are described above, the present invention is not limited thereto and digital signals obtained by any other methods can be applied to the signal processing method of the invention, provided that they correspond to the autoradiograph.

In the above read-out procedures, it is not always necessary to conduct the read-out operation of the autoradiograph all over the surface of the radiographic film or the stimulable phosphor sheet. Only the image region may be subjected to the read-out operation.

In the present invention, there may be previously inputted information on the location of each resolved row and the width of band to preset read-out conditions and then conducted scanning at a scanning line density such that each band is traversed by at least two scanning lines in the read-out operation, so as to shorten read-out time and obtain efficiently necessary information. The digital signals corresponding to the autoradiograph in the invention also include the thus-obtained digital signals.

The obtained digital signals $D_{xy}$ comprise a coordinate $(x,y)$ which is represented by a coordinate system defined by the radiographic film or the stimulable phosphor sheet and a signal level $(z)$ at the coordinate. The signal level represents the density of image at the coordinate, that is, the amount of the radioactively labeled substances. Accordingly, a series of the digital signals (that is, digital image data) have information on two-dimensional location of the labeled substances.

The thus-obtained digital signals corresponding to the autoradiograph of the radioactively labeled substances resolved on a support medium, is subjected to signal processing to determine the base sequence of nucleic acid according to the invention described in more detail below.

Now, the signal processing method of the present invention will be described with respect to the first and second method by referring to an example of electrophoretic rows (resolved rows) formed with a combination of the following four groups of base-specific DNA fragments labeled with a radioactive element:

(1)  guanine (G) - specific DNA fragments,

(2)  adenine (A) - specific DNA fragments,

(3)  thymine (T) - specific DNA fragments, and

(4)  cytosine (C) - specific DNA fragments.

Each of the above base-specific DNA fragments comprises DNA fragments which are base-specific cleavage products or synthetic products, namely having various lengths and the same bases at terminals.

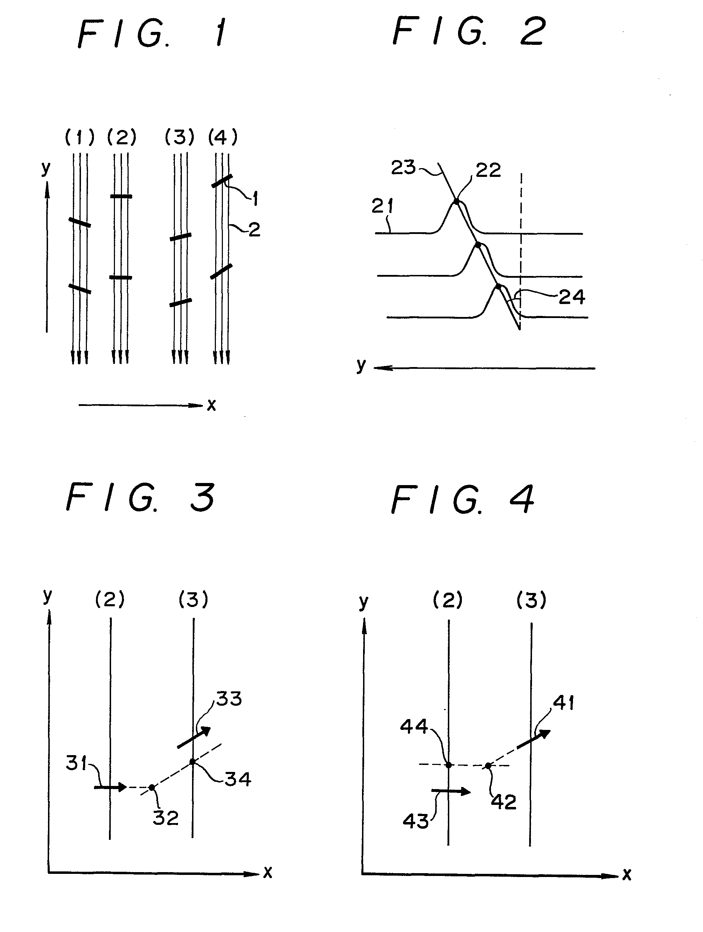

Figure 1 shows a partial view of an autoradiograph

- 12 -

0198403

of electrophoretic pattern obtained by electrophoresing the above four groups of the base-specific DNA fragments in four slots, respectively.

The digital signals corresponding to the autoradiograph are temporarily stored in a memory device (that is, a nonvolatile memory unit such as buffer memory, a magnet disk, etc.) of the signal processing circuit.

First, inclination of at least one band on each electrophoretic row (lane) to the electrophoretic direction is detected.

When scanning for the detection of the digital signals is carried out along each lane with such a scanning line density that at least two scanning lines traverse each band (see Fig. 1, 1: electrophoretic band, 2: scanning line), a one-dimensional waveform composed of position (y) and signal level (z) can be directly prepared for each scanning line. When the autoradiograph is read out in overall area thereof, signals are extracted along each lane by scanning-processing the digital image date in a similar manner to that described above and then a one-dimensional waveform is prepared.

Figure 2 is a schematic view illustrating a step for detecting the inclination of a band.

A point where the sign of a difference in signal level is inverted on a one-dimensional waveform 21 is, for example, found out so as to detect a position 22 where the signal level is maximum. For one band, the corresponding points having the maximum values on individual scanning lines are joined to one another to obtain a regression line (straight line) 23, and inclination ($\theta$) 24 of the regression line to the electrophoretic direction (namely, the direction of the scanning line) is determined, whereby the inclination of the band can be detected. This operation is done for at least one band of every lane. From the viewpoint of an improvement in accuracy, it is preferred to detect the inclination of a band in the lower part (namely, an area where the migration distance is relatively long) where the smiling effect is so remarkable that the inclination thereof is larger. Also preferred is to employ bands adjacent to each other on the individual lanes (bands having nearly the same migration distance).

Secondly, a standard row (standard lane) is then fixed, and positions on the other lanes, which are relative to the position of the band on the standard lane, are determined based on the detected inclinations of bands.

To the standard lane is preferably fixed a lane where the smiling effect is minimum, that is, the inclination is the smallest.

Figure 3 is a schematic view illustrating a step for determining a relative position on a lane.

The second slot is allowed to be the standard lane. As partially shown in Fig. 3, the standard band 31 (its position: $y_2$) on the standard lane, whose inclination has been detected, is extended to a middle point 32 between the standard lane and a lane (the third slot) adjacent thereto. Subsequently, the middle point is referred to as a starting point and a line to the adjacent lane is produced such that the line has the same inclination as that of the inclination-detected band 33 on the adjacent lane. Namely, a straight line parallel to the band 33 is extended from the middle point to the third slot. The intersection point 34 where the extended line intersects with the adjacent lane is a relative position $y_3$ of the standard band.

The above operation is done for the rest lanes on the basis of the inclination-detected bands on those lanes, and other relative positions $y_1$ and $y_2$ of the standard band on the individual lanes are determined. When a relative position of the standard band on a lane not directly adjacent to the standard lane is to be determined, the relative position may be directly determined between the standard lane and said lane, or the
relative position may be determined in such a manner that
a relative position is determined between the standard
lane and a lane adjacent thereto and sequentially a
relative position is determined between said adjacent
lane and a lane adjacent thereto. In this way, positions
which each slot (sample of each slot) reaches in an equal
period of time can be determined based on the standard
band on the standard lane.

Thirdly, correction for the position is made on each
lane on the basis of the relative position on each lane.

For instance, as for the third slot, the migration
distance $y'_3$ from the electrophoresis starting point to
the relative position $y_3$ on the third lane and the migra-
tion distance $y'_2$ from the electrophoresis starting point
to the position $y_2$ of the standard band on the standard
lane are obtained with respect to the third slot, and
then the ratio of $y'_2/y'_3$ is calculated. The ratio of
the migration distance (which is the ratio of electrophoretic rate) in the other lanes can be calculated by
conducting the above operation for the other slots. When
the plural ratios are calculated by using the inclinations of two or more bands per lane or by using two or
more standard bands, the average ratio thereof is taken
as a ratio for said lane. The obtained ratio of migration distance represents the degree of the smiling effect
in each lane.

The migration distance on each lane other than the
standard lane is extended or shortened on the basis of
the ratio. For example, with regard to the third slot,
the migration distance can be corrected in a lump by
extending the one-dimensional waveform of the scanning
lines in said slot at the ratio of $y'_2/y'_3$. With regard
to the other lanes, the migration distances thereof are
respectively extended or shortened on the basis of the ratios of migration distance. In this way, the correction for the smiling effect can be made on all lanes.

In the case that a central lane where the smiling effect is not caused is used as the standard lane, the corrected positions on each lane are positions to which the sample would migrate when the smiling effect was not caused.

Thus, the correction for the smiling effect can be made by carrying out the signal processing for correcting migration distance on every slot when the electrophoretic pattern causes the smiling phenomenon.

Further (fourthly), with regard to the migration distance-corrected one-dimensional waveform of the scanning line, positions of all bands on each lane can be detected, for instance, by detecting points having maximum signal levels on said waveform. The position of a band may be a maximum point on a scanning line passing through the nearly central part of a lane, or may be the average of maximum points on scanning lines of said lane.

All the bands are sequenced from the lower part of the electrophoretic pattern in order on the basis of the detected positions thereof. The sequence can be easily determined on the basis of the fact that two or more bands can not be detected at the same position among the lanes, since a combination of the above four groups of the base-specific DNA fragments is exclusive from each other. The four slots (1) to (4) have information on the terminal base of (G), (A), (T) or (C), respectively, so that the introduction of a base corresponding to the slot to which each band belongs into the band sequence gives the base sequence of DNA. For instance, the base sequence of DNA can be obtained as:

A - G - C - T - A - A - G- •••••••.

The signal processing method of the present inven-

tion will be now described with respect to the third and fourth methods by referring to the above-mentioned example.

Firstly, the detection of the inclination is done for all bands on each lane in the same manner as afore-described (see Fig. 2).

Secondly, a standard row (standard lane) is fixed, and positions on the standard lane, which are relative to the positions of the bands on the other lanes, are determined based on the detected inclinations of bands.

To the standard lane is preferably fixed a lane where the smiling effect is minimum, that is, the inclination is the smallest. Usually a central lane in the electrophoretic pattern is fixed.

Figure 4 is a schematic view illustrating a step for determining a relative position on a lane.

The second slot is allowed to be the standard lane. As partially shown in Fig. 4, a band 41 (its position: $y_5$) on a lane (the third lane) adjacent to the standard lane is extended to a middle point 42 between said lane and the standard lane. Subsequently, the middle point is referred to as a starting point and a line to the standard lane is produced such that the line has the same inclination as that of a standard band 43 which is near to said band 41 and on the standard lane. Namely, a straight line parallel to the band 43 is extended from the middle point to the standard lane. The intersection point 44 where the extended line intersects with the standard lane is a relative position $y_6$ of the band 41.

The obtained relative position 44 on the standard lane represents a position to which the sample of the band 41 would migrate in the second slot (standard lane). Namely, it represents a position on the standard lane, to which the sample of the band 41 would reach in an equal period of time.

The above operation is done for all bands on the

- 17 -                    C198403

rest lanes to determine relative positions thereof on the standard lane, respectively. A relative position of a band on a lane not directly adjacent to the standard lane can be determined in the afore-described manner.

Thus, the correction for the smiling effect can be made with high accuracy on all the bands by carrying out the signal processing for correcting migration position on every band when the electrophoretic pattern causes the smiling phenomenon.

In the case that a central lane where the smiling effect is not caused is used as the standard lane, the corrected positions of the bands are positions to which the sample would migrate when the smiling effect was not caused.

Further (thirdly), since the relative positions of all bands on the electrophoretic pattern are determined on the standard lane, all the bands are directly sequenced by comparing their positions with each other. The band sequence is easily determined based on the fact of the exclusive combination of the base-specific DNA fragments. Then, the base sequence of DNA is obtained in the same manner as aforedescribed.

In these ways, the base sequence of one chain molecule of DNA can be determined. The representation mode of the information on the base sequence of DNA is by no means limited to the above-mentioned mode, and other representation modes may be utilized optionally. For instance, the intensity ($z'$) of each band can be represented as the relative amount of the radioactively labeled substances, if desired. Further, the base sequence of both two chain molecules of DNA can be also represented.

Information can be also displayed as an image on the basis of the above-mentioned smiling-corrected digital signals. At the same time, the original autoradiograph can be displayed as a visualized image. In this case, investigators themselves can finally determine the base sequence on the basis of the display image.

In the above-mentioned example, there has been described the case where the exclusive combination of the mixture (G, A, T, C) of the base-specific DNA fragments as a sample is used, but the signal processing method of the present invention is by no means limited to the above combination, and other combinations can be used. For instance, a combination of (G, G+A, T+C, C) can be used. Further, the signal processing method of the present invention can be also applied to the mixtures (for instance, a combination of G, A, U, C) of base-specific RNA fragments. Moreover, the correction for the smiling effect is not limited to one set of resolved rows of base-specific fragments of a nucleic acid, but can be made on all resolved rows simultaneously resolved on a support medium.

It is possible to perform the genetic philological information processing such as comparison between the obtained base sequence of the DNA and the base sequence of another DNA which has been already recorded and stored in a suitable means.

The information on the base sequence of DNA determined through the above-mentioned signal processing is output from the signal processing circuit, and subsequently transmitted to a recording device directly or optionally via storage in a storing means such as a magnetic disk or a magnetic tape.

Various recording devices based on various systems can be employed for the above-described purpose, for instance, a device for visualizing optically by scanning a photosensitive material with laser beam,etc., a display means for visualizing electrically on CRT, etc., a means for printing a radiation image displayed on CRT by means of a video printer, and a means for visualizing on a heatsensitive recording material using thermic rays.

CLAIMS:

1.    A signal processing method for determining base sequence of nucleic acids by subjecting digital signals to signal processing, said digital signals corresponding to an autoradiograph of plural resolved rows which are formed by resolving a mixture of base-specific DNA fragments or base-specific RNA fragments labeled with a radioactive element in one-dimensional direction on a support medium,

which comprises steps of:

(1)    detecting inclination of at least one band to the resolving direction for each resolved row;

(2)    allowing one resolved row to be a standard row, and determining a relative position of the inclination-detected band on the standard row, on each resolved row other than the standard row on the basis of the inclination of the band on said each row; and

(3)    determining a ratio of resolving distance from the relative position for each resolved row other than the standard row and extending or shortening the resolving distance of said each row on the basis of the ratio.

2.    The signal processing method as claimed in claim 1, wherein said digital signals are obtained by scanning the autoradiograph in such a manner that each band is traversed by at least two scanning lines, and in said step (1), positions on individual scanning lines where signal level is maximum are found out and the inclination is detected on the basis of the positions.

3.    The signal processing method as claimed in claim 1, wherein the inclination of a band positioned at the lower part of each resolved row is detected, in said step (1).

4.   The signal processing method as claimed in claim 1, wherein a resolved row having a band whose inclination to the resolving direction is minimum is allowed to be the standard row, in said step (2).

5.   The signal processing method as claimed in claim 1, wherein the band on the standard row is extrapolated to each resolved row other than the standard row on the basis of the inclinations of said band and the band on said each row, to thereby determine the relative position of said band on said each row, in said step (2).

6.   The signal processing method as claimed in claim 1, wherein the mixture of the base-specific DNA fragments consists of the four groups of:
    (1)   guanine-specific DNA fragments;
    (2)   adenine-specific DNA fragments;
    (3)   thymine-specific DNA fragments; and
    (4)   cytosine-specific DNA fragments;
and the resolved rows consist of four rows formed by resolving each of said four groups of the base-specific DNA fragments on the support medium.

7.   The signal processing method as claimed in claim 1, wherein said digital signals corresponding to the autoradiograph are obtained by placing the support medium and a stimulable phosphor sheet comprising a stimulable phosphor together in layers to record the autoradiograph of the plural resolved rows on the phosphor sheet as an energy-stored image, irradiating said phosphor sheet with stimulating rays and photoelectrically detecting the autoradiograph as stimulated emission.

- 21 - 0198403

8. The signal processing method as claimed in claim 1, wherein said digital signals corresponding to the autoradiograph are obtained by placing the support medium and a radiosensitive material together in layers to record the autoradiograph of the plural resoved rows on the radiosensitive material as a visible image and photoelectrically reading out the autoradiograph visualized on said radiosensitive material.

9. A signal processing method for determining base sequence of nucleic acids by subjecting digital signals to signal processing, said digital signals corresponding to an autoradiograph of plural resolved rows which are formed by resolving a mixture of base-specific DNA fragments or base-specific RNA fragments labeled with a radioactive element in one-dimensional direction on a support medium,

which comprises steps of:

(1) detecting inclination of at least one band to the resolving direction for each resolved row;

(2) allowing one resolved row to be a standard row, and determining a relative position of the inclination-detected band on the standard row, on each resolved row other than the standard row on the basis of the inclination of the band on said each row;

(3) determining a ratio of resolving distance from the relative position for each resolved row other than the standard row and extending or shortening the resolving distance of said each row on the basis of the ratio; and

(4) detecting all bands on every resolved row and determining the sequence of the bands on the basis of their positions.

0198403

10. The signal processing method as claimed in claim 9, wherein said digital signals are obtained by scanning the autoradiograph in such a manner that each band is traversed by at least two scanning lines, and in said step (1), positions where signal level is maximum on individual scanning lines are found out and the inclination is detected on the basis of the positions.

11. The signal processing method as claimed in claim 9, wherein the inclination of a band positioned at the lower part of each resolved row is detected, in said step (1).

12. The signal processing method as claimed in claim 9, wherein a resolved row having a band whose inclination to the resolving direction is minimum is allowed to be the standard row, in said step (2).

13. The signal processing method as claimed in claim 9, wherein the band on the standard row is extrapolated to each resolved row other than the standard row on the basis of the inclinations of said band and the band on said each row, to thereby determine the relative position of said band on said each row, in said step (2).

14. The signal processing method as claimed in claim 9, wherein said all bands on every resolved row are detected by finding out positions where signal level is maximum on scanning lines, in said step (4).

0198403

15. The signal processing method as claimed in claim 9, wherein the mixture of the base-specific DNA fragments consists of the four groups of:

(1) guanine-specific DNA fragments;

(2) adenine-specific DNA fragments;

(3) thymine-specific DNA fragments; and

(4) cytosine-specific DNA fragments;

and the resolved rows consist of four rows formed by resolving each of said four groups of the base-specific DNA fragments on the support medium.

16. The signal processing method as claimed in claim 9, wherein said digital signals corresponding to the autoradiograph are obtained by placing the support medium and a stimulable phosphor sheet comprising a stimulable phosphor together in layers to record the autoradiograph of the plural resolved rows on the phosphor sheet as an energy-stored image, irradiating said phosphor sheet with stimulating rays and photoelectrically detecting the autoradiograph as stimulated emission.

17. The signal processing method as claimed in claim 9, wherein said digital signals corresponding to the autoradiograph are obtained by placing the support medium and a radiosensitive material together in layers to record the autoradiograph of the plural resoved rows on the radiosensitive material as a visible image and photoelectrically reading out the autoradiograph visualized on said radiosensitive material.

- 24 -   0198403

18. A signal processing method for determining base sequence of nucleic acids by subjecting digital signals to signal processing, said digital signals corresponding to an autoradiograph of plural resolved rows which are formed by resolving a mixture of base-specific DNA fragments or base-specific RNA fragments labeled with a radioactive element in one-dimensional direction on a support medium,

which comprises steps of:

(1) detecting inclinations of all bands to the resolving direction for every resolved row; and

(2) allowing one resolved row to be a standard row, and determining a relative position of each band on resolved rows other than the standard row, on the standard row on the basis of the inclination of said band on the other rows.

19. The signal processing method as claimed in claim 18, wherein said digital signals are obtained by scanning the autoradiograph in such a manner that each band is traversed by at least two scanning lines, and in said step (1), positions on individual scanning lines where signal level is maximum are found out and the inclination is detected on the basis of the positions.

20. The signal processing method as claimed in claim 18, wherein a resolved row having bands whose average inclination to the resolving direction is minimum is allowed to be the standard row, in said step (2).

21.  The signal processing method as claimed in claim 18, wherein each band on resolved rows other than the standard row is extrapolated to the standard row on the basis of the inclinations of said band and a band on the standard row, to thereby determine the relative position of said band on the standard row, in said step (2).

22.  The signal processing method as claimed in claim 18, wherein the mixture of the base-specific DNA fragments consists of the four groups of:
      (1)  guanine-specific DNA fragments;
      (2)  adenine-specific DNA fragments;
      (3)  thymine-specific DNA fragments; and
      (4)  cytosine-specific DNA fragments;
and the resolved rows consist of four rows formed by resolving each of said four groups of the base-specific DNA fragments on the support medium.

23.  The signal processing method as claimed in claim 18, wherein said digital signals corresponding to the autoradiograph are obtained by placing the support medium and a stimulable phosphor sheet comprising a stimulable phosphor together in layers to record the autoradiograph of the plural resolved rows on the phosphor sheet as an energy-stored image, irradiating said phosphor sheet with stimulating rays and photoelectrically detecting the autoradiograph as stimulated emission.

24.    The signal processing method as claimed in claim 18, wherein said digital signals corresponding to the autoradiograph are obtained by placing the support medium and a radiosensitive material together in layers to record the autoradiograph of the plural resoved rows on the radiosensitive material as a visible image and photoelectrically reading out the autoradiograph visualized on said radiosensitive material.

25.    A signal processing method for determining base sequence of nucleic acids by subjecting digital signals to signal processing, said digital signals corresponding to an autoradiograph of plural resolved rows which are formed by resolving a mixture of base-specific DNA fragments or base-specific RNA fragments labeled with a radioactive element in one-dimensional direction on a support medium,
    which comprises steps of:
    (1)    detecting inclinations of all bands to the resolving direction for every resolved row; and
    (2)    allowing one resolved row to be a standard row, and determining a relative position of each band on resolved rows other than the standard row, on the standard row on the basis of the inclination of said band on the other rows; and
    (3)    determining the sequence of the bands on the basis of their relative positions.

26.    The signal processing method as claimed in claim 25, wherein said digital signals are obtained by scanning the autoradiograph in such a manner that each band is traversed by at least two scanning lines, and in said step (1), positions on individual scanning lines where signal level is maximum are found out and the inclination is detected on the basis of the positions.

27.  The signal processing method as claimed in claim 25, wherein a resolved row having bands whose average inclination to the resolving direction is minimum is allowed to be the standard row, in said step (2).

28.  The signal processing method as claimed in claim 25, wherein each band on resolved rows other than the standard row is extrapolated to the standard row on the basis of the inclinations of said band and a band on the standard row, to thereby determine the relative position of said band on the standard row, in said step (2).

29.  The signal processing method as claimed in claim 25, wherein the mixture of the base-specific DNA fragments consists of the four groups of:
    (1)  guanine-specific DNA fragments;
    (2)  adenine-specific DNA fragments;
    (3)  thymine-specific DNA fragments; and
    (4)  cytosine-specific DNA fragments;
and the resolved rows consist of four rows formed by resolving each of said four groups of the base-specific DNA fragments on the support medium.

30.  The signal processing method as claimed in claim 25, wherein said digital signals corresponding to the autoradiograph are obtained by placing the support medium and a stimulable phosphor sheet comprising a stimulable phosphor together in layers to record the autoradiograph of the plural resolved rows on the phosphor sheet as an energy-stored image, irradiating said phosphor sheet with stimulating rays and photoelectrically detecting the autoradiograph as stimulated emission.

31.  The signal processing method as claimed in claim 25, wherein said digital signals corresponding to the autoradiograph are obtained by placing the support medium and a radiosensitive material together in layers to record the autoradiograph of the plural resoved rows on the radiosensitive material as a visible image and photoelectrically reading out the autoradiograph visualized on said radiosensitive material.

# FIG. 1

# FIG. 2

# FIG. 3

# FIG. 4